# EUROPÄISCHE PATENTANMELDUNG

(11) **EP 3 398 841 A1**
(43) Veröffentlichungstag der Anmeldung: **07.11.2018**
(21) Anmeldenummer: 18169202.1
(22) Anmeldetag: 25.04.2018
(51) Int. Cl.: B62D 25/20, B62D 29/00, B60N 2/015

(54) **FAHRZEUGBODEN FÜR EIN FAHRZEUG**

(30) Priorität: 03.05.2017 DE 102017109468
(71) Anmelder: AGUTI PRODUKTENTWICKLUNG & DESIGN GMBH, 88085 Langenargen (DE)
(72) Erfinder: Grieger, Andreas, 88079 Kressbronn (DE)
(74) Vertreter: Otten, Roth, Dobler & Partner mbB Patentanwälte

(57) **Zusammenfassung**

Fahrzeugboden fur ein Fahrzeug, insbesondere ein Wohnmobilfahrzeugboden fur ein Wohnmobil, wobei der Fahrzeugboden eine Sandwichstruktur aufweist, wobei die Sandwichstruktur eine erste Deckschicht aufweist, wobei eine Oberseite der ersten Deckschicht im angeordneten Zustand am Fahrzeug einem Fahrzeugraum zugewandt ist, wobei die Sandwichstruktur eine Füllschicht aufweist, welche an eine Unterseite der ersten Deckschicht anschließend angeordnet ist, wobei die Unterseite der ersten Deckschicht gegenüberliegend und beabstandet zur Oberseite der ersten Deckschicht vorhanden ist, wobei die Sandwichstruktur eine zweite Deckschicht umfasst, sodass die Füllschicht zwischen der ersten und der zweiten Deckschicht sandwichartig vorhanden ist. Der Fahrzeugboden zeichnet sich dadurch aus, dass die Sandwichstruktur eine Verstärkungsschicht aufweist, wobei die Verstarkungsschicht eine Metallstruktur aufweist.

## Beschreibung

### Stand der Technik

Im Fahrzeugbau ist es regelmäßig notwendig, Inneneinrichtungen wie beispielsweise eine Sitzanordnung an einem Fahrzeugboden anzubringen.

Bei Kleinbussen sind zum Beispiel sich über die Fläche des Fahrzeugbodens erstreckende plattenartige Stützstrukturen einsetzbar, welche auf dem Fahrzeugboden befestigt werden, um den Fahrzeugboden im Bereich der Sitzanordnung zu verstärken, wobei an den plattenartigen Stützstrukturen dann die Sitzanordnung fixiert wird.

Nachteilig daran ist, dass der bekannte Fahrzeugboden für eine Anbringung einer Sitzanordnung zusätzlich verstärkt werden muss.

### Aufgabe und Vorteile der Erfindung

Aufgabe der vorliegenden Erfindung ist es, eine verbesserte Anbringsituation einer Sitzanordnung an einen Fahrzeugboden bereitzustellen. Insbesondere den Fahrzeugboden weiterzubilden, dass ein Sitzanordnung vergleichsweise einfach und/oder kostengünstig an den Fahrzeugboden anordenbar ist.

Diese Aufgabe wird durch die unabhängigen Ansprüche gelöst.

Die abhängigen Ansprüche betreffen vorteilhafte Varianten der Erfindung.

Die Erfindung geht von einem Fahrzeugboden für ein Fahrzeug aus, insbesondere ein Wohnmobilfahrzeugboden für ein Wohnmobil, wobei der Fahrzeugboden eine Sandwichstruktur aufweist, wobei die Sandwichstruktur eine erste Deckschicht aufweist, wobei eine Oberseite der ersten Deckschicht im angeordneten Zustand am Fahrzeug einem Fahrzeugraum zugewandt ist, wobei die Sandwichstruktur eine Füllschicht aufweist, welche an eine Unterseite der ersten Deckschicht anschließend angeordnet ist, wobei die Unterseite der ersten Deckschicht gegenüberliegend und beabstandet zur Oberseite der ersten Deckschicht vorhanden ist, wobei die Sandwichstruktur eine zweite Deckschicht umfasst, sodass die Füllschicht zwischen der ersten und der zweiten Deckschicht sandwichartig vorhanden ist.

Das Fahrzeug ist z.B. als ein Automobil, als ein Autobus, als ein Wohnmobil oder auch als ein Camping-Mobil ausgebildet. Vorteilhafterweise ist die Füllschicht als Schaum, z.B. als Kunststoffschaum, bspw. als Wärmedämmschaum vorhanden.

Der Kern der Erfindung ist darin zu sehen, dass die Sandwichstruktur eine Verstärkungsschicht aufweist, wobei die Verstärkungsschicht eine Metallstruktur aufweist.

Hierdurch ist der Fahrzeugboden vergleichsweise stabil vorhanden, sodass er Zug- und/oder Druckkräfte, welche z.B. durch eine angeordnete Sitzanordnung auf ihn wirken, in einem Crashfall, aufnehmen und an eine Fahrzeugstruktur des Fahrzeugs ableiten kann. Insbesondere ist der Fahrzeugboden durch die Verstärkungsschicht ausgebildet, auftretende Kräfte flächig innerhalb des Fahrzeugbodens weiter- bzw. abzuleiten, bspw. in Richtung Anbindungsstellen des Fahrzeugbodens an eine Fahrzeugstruktur des Fahrzeugs. Hierdurch sind zusätzliche den Fahrzeugboden an der Fahrzeugstruktur abstützende und/oder verstärkende Elemente, insbesondere im Bereich eines Anbindungsbereichs eines Gurtgestells eines Fahrzeugsitzes am Fahrzeugboden z.B. hinfällig. Dadurch sind beispielsweise Montagezeiten und/oder Montagekosten vorteilhaft verringert.

Die Verstärkungsschicht ist beispielsweise aus Metall, z.B. aus Stahl ausgebildet. Vorteilhafterweise ist die Verstärkungsschicht als eine Verstärkungsstruktur vorhanden. Ist die Verstärkungsschicht aus Metall ausgebildet, kann sie beispielsweise verzinkt vorhanden sein. Denkbar ist auch, dass die Verstärkungsschicht eine Schutzschicht aufweist, welche die Verstärkungsschicht gegen Korrosion schützt.

In einer vorteilhaften Modifikation der Erfindung weist die Sandwichstruktur eine Verstärkungsschicht auf, wobei die Verstärkungsschicht gewebe- und/oder gitterartig vorhanden ist, und wobei die Verstärkungsschicht zwischen der ersten Deckschicht und der Füllschicht oder der zweiten Deckschicht und der Füllschicht angeordnet ist oder wobei jeweils eine erste Verstärkungsschicht zwischen der ersten Deckschicht und der Füllschicht und eine zweite Verstärkungsschicht zwischen der zweiten Deckschicht und der Füllschicht angeordnet ist.

Die Verstärkungsschicht ist beispielsweise mit der ersten und/oder der zweiten Deckschicht und/oder der Füllschicht verklebt. Denkbar ist auch, dass die Füllschicht die Verstärkungsschicht mit der ersten und/oder zweiten Deckschicht verbindet. Beispielsweise umfasst die erste und/oder die zweite Deckschicht die Verstärkungsschicht. Denkbar ist auch, dass die Verstärkungsschicht netzartig und/oder wabenartig vorhanden ist. Beispielsweise ist die Verstärkungsschicht als eine Lochplatte ausgebildet.

Von Vorteil erweist sich auch, dass eine Verstärkungsschicht in die Füllschicht eingebettet ist. Dadurch ist die Verstärkungsschicht in der Sandwichstruktur des Fahrzeugbodens vergleichsweise einfach fixierbar. Insbesondere ist die Verstärkungsschicht dadurch vergleichsweise einfach mit der Füllschicht verbindbar. Vorteilhafterweise umschließt die Füllschicht die Verstärkungsschicht vollständig. Beispielsweise ist die Verstärkungsschicht in die Füllschicht eingeschäumt.

Weiter wird vorgeschlagen, dass die Verstärkungsschicht die erste und/oder die zweite Deckschicht bildet.

Außerdem von Vorteil ist, dass die Verstärkungsschicht gewebe- und/oder gitterartig vorhanden ist. Hierdurch ist die Verstärkungsschicht z.B. durch Umschäumen vergleichsweise einfach mit der ersten oder der zweiten Deckschicht und/oder der Füllschicht verbindbar. Durch eine gewebe- und/oder gitterartige Ausbildung der Verstärkungsschicht besitzt die Verstärkungsschicht bspw. ein vergleichsweise geringes Gewicht.

In einer vorteilhaften Ausbildung des Fahrzeugbodens sind am Fahrzeugboden zwei oder mehr Verstärkungsschichten vorhanden.

Die Verstärkungsschichten können parallel versetzt zueinander, z.B. übereinanderliegend vorhanden sein, ähnlich oder gleich einer Armierung. Denkbar ist auch, dass die Verstärkungsschichten nebeneinander vorhanden sind, z.B. in einer Ebene nebeneinander oder hintereinanderliegend. Vorteilhafterweise sind genau zwei Verstärkungsschichten vorhanden. Denkbar ist auch, dass die Verstärkungsschichten sich unterscheiden, z.B. in der Dicke, im Gitter- und/oder Lochabstand und/oder in einer Ausbildung der Gitterstäbe, z.B. einer Form der Gitterstäbe. Vorstellbar ist weiter, dass die Verstärkungsschichten identisch vorhanden sind, insbesondere wenn genau zwei Verstärkungsschichten vorgesehen sind. Vorstellbar ist außerdem, dass genau eine einzige Verstärkungsschicht vorhanden ist. Beispielsweise erstreckt sich die genau eine einzige Verstärkungsschicht in einem Inneren der Füllschicht. Bevorzugterweise sind mehr als zwei Verstärkungsschichten vorhanden, insbesondere wenn zumindest eine Verstärkungsschicht sich entlang einer Teilfläche des Fahrzeugbodens, insbesondere entlang einer Teilfläche der ersten und/oder zweiten Deckschicht und/oder eine Teilfläche der Füllschicht erstreckt.

Die Fläche des Fahrzeugbodens erstreckt sich im angeordneten Zustand am Fahrzeug vorteilhafterweise in einer horizontalen Richtung, insbesondere parallel zu einer Fahrtrichtung des Fahrzeugs.

Weiter wird vorgeschlagen, dass ein Gitterlochabstand, ein Gitterabstand, ein Lochabstand und/oder ein Maschenabstand der Verstärkungsschicht einen Abstand zwischen 3cm und 10cm aufweist. Vorstellbar ist auch, dass der Gitterlochabstand zwischen 2cm und 15cm beträgt.

Beispielsweise beträgt der Gitterlochabstand 3cm, 3,5cm, 4cm, 4,5cm, 5,5cm, 6cm, 6,5cm, 7cm, 7,5cm, 8cm, 8,5cm, 9cm, 9,5cm oder 10cm. Denkbar ist auch, dass der Gitterlochabstand in eine Erstreckungsrichtung des Gitters verschieden ist, zu einem Gitterlochabstand in eine weitere Erstreckungsrichtung des Gitters.

Vorteilhafterweise beträgt der Gitterlochabstand, bzw. das Gitterraster ungefähr 5cm, insbesondere genau 5cm. Bevorzugterweise ist ein Gitter oder Netz der Verstärkungsschicht vergleichsweise grobmaschig ausgebildet. Hierdurch ist ein Gewicht der Verstärkungsschicht und damit des Fahrzeugbodens vergleichsweise gering. Beispielsweise bilden die Gitterlöcher bzw. die Maschenöffnungen mehr als 50%, mehr als 60%, mehr als 70%, mehr als 80%, mehr als 90% oder mehr als 95% einer Fläche der Verstärkungsschicht.

Außerdem wird vorgeschlagen, dass die Verstärkungsschicht eine Dicke zwischen 1mm und 8mm aufweist.

Die Verstärkungsschicht weist beispielsweise ein Dicke zwischen 1mm und 5mm auf. Insbesondere besitzt die Verstärkungsschicht eine Dicke von 3mm. Die Verstärkungsschicht besitzt z.B. eine Dicke von 1 mm, 2mm, 3mm, 4mm und/oder 5mm. Beispielsweise entspricht die Dicke der Verstärkungsschicht einer Dicke und/oder einer Breite eines Gitterstabs der Verstärkungsschicht, z.B. einem Durchmesser des Gitterstabs. Gitterstäbe der Verstärkungsschicht sind in einem Querschnitt beispielsweise rund, oval und/oder auch rechteckig ausgebildet.

Von Vorteil ist auch, dass die Verstärkungsschicht sich entlang einer gesamten Fläche des Fahrzeugbodens erstreckt. Beispielsweise erstreckt sich die Verstärkungsschicht parallel zur ersten und/oder zur zweiten Deckschicht. Vorteilhafterweise schließt im angeordneten Zustand der Verstärkungsschicht am Fahrzeugboden ein Rand der Verstärkungsschicht aus einer Draufsicht auf die Oberseite der ersten Deckschicht gesehen mit einem Rand der ersten und/oder der zweiten Deckschicht bündig ab. Insbesondere schließen im angeordneten Zustand der Verstärkungsschicht am Fahrzeugboden aus einer Draufsicht auf die Oberseite der ersten Deckschicht gesehen alle Ränder der Verstärkungsschicht mit allen Rändern der ersten und/oder der zweiten Verstärkungsschicht bündig ab.

In einer vorteilhaften Ausbildung des Fahrzeugbodens erstreckt sich die Verstärkungsschicht, insbesondere erstreckt sich mindestens eine von mehreren Verstärkungsschichten, in einem Flächenbereich zwischen 0,5m² und 1m^² entlang einer Fläche des Fahrzeugbodens, insbesondere entlang einer Flächenerstreckung der ersten und/oder der zweiten Deckschicht. Vorteilhafterweise erstreckt sich eine Verstärkungsschicht über eine Teilfläche der Fläche des Fahrzeugbodens insbesondere entlang einer Teil-Flächenerstreckung der ersten und/oder der zweiten Deckschicht.

Weiter erweist es sich von Vorteil, dass die Verstärkungsschicht des Fahrzeugbodens sich zumindest in einem Flächenbereich entlang eines Anbindungsbereichs eines an den Fahrzeugboden anordenbaren Gurtgestells erstreckt und/oder dass die Verstärkungsschicht sich in einem Flächenbereich um den Anbindungsbereich eines an den Fahrzeugboden anordenbaren Gurtgestells erstreckt.

Ein solches Gurtgestell ist insbesondere als Einbauvorrichtung in der Art eines rahmenartigen Gestells ausgebildet, umfassend Freilassungen, die von parallel und winklig zueinander ausgerichteten, miteinander verbundenen, insbesondere länglichen Profilen umrahmt sind. Die Profile bestehen vorzugsweise aus einem metallischen Material. Das Gurtgestell ist vorzugsweise dazu ausgebildet an einem Bodenabschnitt, dem Anbindungsbereich, des Fahrzeugbodens des Fahrzeugs befestigt zu werden. Bevorzugterweise ist das Gurtgestell lösbar oder unlösbar fixierbar am Fahrzeugboden anbringbar.

In einer vorteilhaften Variante weist der Fahrzeugboden ein Aufnahmeorgan zur Aufnahme eines Rückhalteorgans eines Gurtgestells eines Fahrzeugsitzes auf.

Das Rückhalteorgan des Gurtgestell ist vorteilhafterweise bandartig vorhanden, z.B. als ein Zugband ausgebildet. Das Rückhalteorgan dient zur Aufnahme von Zugkräften, bzw. zur Energieabsorption von Zugkräften, welche das Gurtgestell im Crashfall erfährt. Hierdurch ist z.B. eine maximale Verformung des Gurtgestells vorgebbar. Das Aufnahmeorgan ist beispielsweise röhrenartig ausgestaltet, sodass das Rückhalteorgan im angeordneten Zustand des Gurtgestells für einen Nutzer des Fahrzeugs unsichtbar entlang des Fahrzeugbodens, z.B. in einem Inneren des Fahrzeugbodens, z.B. des Aufnahmeorgans geführt ist. Beispielsweise erstreckt sich das Aufnahmeorgan zumindest über einen Teilbereich zwischen der ersten und der zweiten Deckschicht im Inneren des Fahrzeugbodens. Beispielsweise ist im angeordneten Zustand des Gurtgestells am Fahrzeug das Rückhalteorgan im Inneren des Aufnahmeorgans verlaufend vorhanden. Das Aufnahmeorgan ist beispielsweise als ein Kanal, z.B. in Form einer Röhre, ausgebildet. Im angeordneten Zustand des Rückhalteorgans am Fahrzeug ist das Rückhalteorgan für einen Nutzer dadurch z.B. nicht sichtbar vorhanden. Beispielsweise umfasst der Kanal des Aufnahmeorgans entlang seiner Längserstreckung einen Schlitz durch welchen das Rückhalteorgan in das Innere des Kanals einführbar ist. Der Schlitz ist beispielweise bündig zur Oberseite der ersten Deckschicht des Fahrzeugbodens vorhanden. Zum Beispiel umfasst die erste Decksicht den Schlitz.

Von Vorteil ist auch, dass zwei oder mehr Verstärkungsschichten vorhanden sind, wobei die Verstärkungsschichten voneinander beabstandet vorhanden sind, wobei der Fahrzeugboden Verbindungsmittel aufweist und die Verbindungsmittel die Verstärkungsschichten miteinander verbinden.

Die Verbindungsmittel sind beispielsweise als ein Gitter, ein Band und/oder ein Stab vorhanden. Vorteilhafterweise erstreckt sich ein Verbindungsmittel, insbesondere alle Verbindungsmittel quer, insbesondere senkrecht zu den Erstreckungsebenen der Verstärkungsschichten. Beispielsweise erstrecken sich die Verbindungsmittel im angeordneten Zustand am Fahrzeugboden in insbesondere vertikaler Richtung zwischen der ersten und der zweiten Deckschicht. Denkbar ist außerdem, dass die Verbindungsmittel zusammen mit den Verstärkungsschichten käfigartig vorhanden sind.

### Beschreibung eines Ausführungsbeispiels

Weitere Merkmale und Vorteile der Erfindung sind anhand eines schematisiert dargestellten Ausführungsbeispiels der Erfindung näher erläutert.

Im Einzelnen zeigen:
- Figur 1: eine Teilansicht auf einen Querschnitt eines erfindungsgemäßen Fahrzeugbodens und
- Figur 2: eine seitliche Ansicht auf ein Fahrgestell eines Fahrzeugs mit angeordnetem erfindungsgemäßen Fahrzeugboden und auf dem Fahrzeugboden befestigtem Gurtgestell eines Fahrzeugsitzes in einem Grundzustand und in einem Zustand im Crashfall.

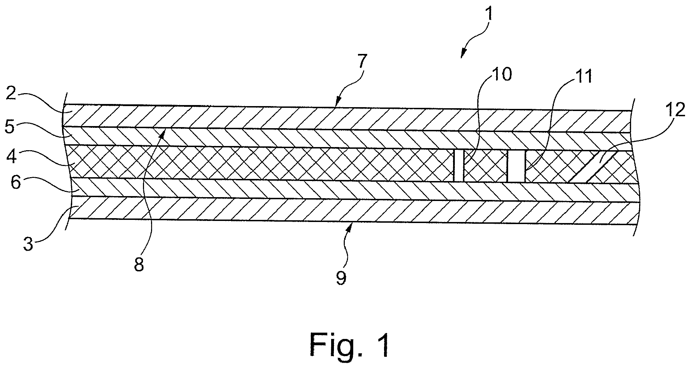

Ein erfindungsgemäßer Fahrzeugboden 1 umfasst eine erste Deckschicht 2, einer zweite Deckschicht 3, eine Füllschicht 4, eine erste Verstärkungsschicht 5 und z.B. eine zweite Verstärkungsschicht 6. Die erste Deckschicht 2 und die zweite Deckschicht 3 umschließen die Füllschicht 4 und die erste und die zweite Verstärkungsschicht 5, 6 beispielsweise sandwichartig (Figur 1).

Die erste Deckschicht 2 besitzt eine Oberseite 7 und eine Unterseite 8, wobei die Oberseite 7 und die Unterseite 8 beabstandet voneinander sich gegenüberliegend vorhanden sind. Der Fahrzeugboden 1 ist beispielsweise schichtartig aufgebaut, wobei die erste Deckschicht 2 eine oberste Schicht bildet, dann die erste Verstärkungsschicht 5 anliegend an die Unterseite 8 der ersten Deckschicht 2 folgt, weiter die Füllschicht 4, die zweite Verstärkungsschicht 6 und abschließend die zweite Deckschicht 3. Eine Unterseite 9 der zweiten Deckschicht 3 schließt den Fahrzeugboden 1 beispielsweise nach unten ab. Vorteilhafterweise sind die Schichten des Fahrzeugbodens 1 alle miteinander fest, insbesondere unlösbar verbunden.

Figur 1 sind außerdem strebenartige Verbindungsmittel 10 - 12 zu entnehmen, welche die erste und die zweite Verstärkungsschicht 5, 6 miteinander verbinden. Die Verbindungsmittel 10 - 12 sind vorteilhafterweise fest, insbesondere unlösbar mit den Verstärkungsschichten 5, 6 verbunden. Die Verbindungsmittel 10 - 12 sind beispielsweise einstückig mit den Verstärkungsschichten 5, 6 ausgebildet. Die Verbindungsmittel 10 - 12 erstrecken sich beispielsweise senkrecht und/oder schräg zur Unterseite 8 der ersten Deckschicht 2. Vorteilhafterweise ist die erste Verstärkungsschicht 5 zur zweiten Verstärkungsschicht 6 durch die Verbindungsmittel 10 - 12 fest beabstandet vorhanden. Beispielsweise ist die erste Verstärkungsschicht 5 zur zweiten Verstärkungsschicht 6 positionsfest vorhanden.

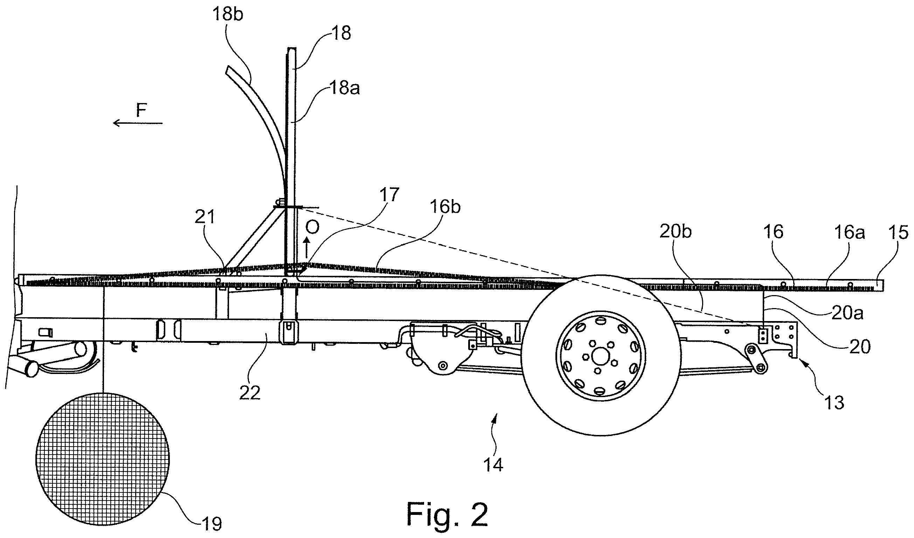

Figur 2 zeigt einen Teilausschnitt eines Fahrgestells 13 eines Fahrzeugs 14, an welchem eine weitere Variante eines Fahrzeugbodens 15 in einem Grundzustand und in einem Funktionszustand z.B. im Crashfall dargestellt ist. Zur Unterscheidung des Grundzustands und des Funktionszustands der einzelnen nachfolgend genannten Merkmale sind die Bezugszeichen der Merkmale in der Figur 2 zusätzlich mit einem Buchstaben a für den Grundzustand des Merkmals und mit einem Buchstaben b für den Funktionszustand des Merkmals gekennzeichnet.

Der Fahrzeugboden 15 umfasst eine Verstärkungsschicht 16, welche im Grundzustand innerhalb des Fahrzeugbodens 15 angeordnet ist. Figur 2 zeigt weiterhin einen Ausschnitt 19 einer Draufsicht auf die Verstärkungsschicht 16. Der Ausschnitt 19 zeigt die vorteilhafte gitterartige oder bspw. maschenartige Struktur der Verstärkungsschicht 16.

Auf dem Fahrzeugboden 15 kann an einem Anbindungsbereich 17 ein Gurtgestell 18 eines Fahrzeugsitzes angeordnet sein. Das Gurtgestell 18 umfasst des Weiteren z.B. ein Rückhalteorgan 20, welches im angeordneten Zustand am Fahrzeug 14 dazu ausgebildet ist, eine Verformung und/oder Positionsveränderung des Gurtgestells 18 in einem Crashfall des Fahrzeugs 14 vorzugeben. Das Rückhalteorgan 20 kann im angeordneten Zustand am Fahrzeug 14 entlang des Fahrzeugbodens 15 verlaufend angeordnet sein. Vorteilhafterweise ist das Rückhalteorgan 20 im angeordneten Zustand am Fahrzeug 14 innerhalb des Fahrzeugbodens 15 verlaufend vorhanden.

Ein Crashfall ist häufig ein Frontalzusammenstoß des Fahrzeugs 14 mit einem weiteren Gegenstand. Bei einem solchen Frontalzusammenstoß wirken z.B. Kräfte, sodass das Gurtgestell in Fahrtrichtung F des Fahrzeugs 14 um einen Befestigungspunkt 21 des Gurtgestells 18 am Fahrzeugboden 15 gedreht wird. Wobei der Befestigungspunkt 21 des Gurtgestells 18 in einem vorderen Bereich des Gurtgestells 18 ausgebildet ist. Hierbei wirken im Bereich des Befestigungspunkts 21 Druckkräfte auf den Fahrzeugboden 15, in Richtung eines Fahrzeugrahmens 22 des Fahrgestells 13 des Fahrzeugs 14. In einem hinteren Bereich des Gurtgestells 18 wird das Gurtgestell 18 hingegen vom Fahrzeugboden 15 durch die Drehung um den Befestigungspunkt 21 abgehoben. Da das Gurtgestell 18 vorteilhafterweise im hinteren Bereich ebenfalls mit dem Fahrzeugboden 15 verbunden ist, wirken an dieser Stelle somit Zugkräfte auf den Fahrzeugboden 15.

Weiter ist es vorteilhaft, dass der Fahrzeugboden 15 mit der Verstärkungsschicht 16 derart vorhanden ist, dass der Fahrzeugboden 15, vorteilhafterweise die Verstärkungsschicht 16 im vorderen Anbindungsbereich des Gurtgestells 18 am Fahrzeugboden 15 die im Crashfall auftretenden Druckkräfte aufnehmen und ableiten kann und im hinteren Anbindungsbereich des Gurtgestells 18 am Fahrzeugboden 15 die im Crashfall auftretenden Zugkräfte aufnehmen und ableiten kann. Hierzu ist der Fahrzeugboden 15 mit der Verstärkungsschicht 16 beispielsweise derart ausgebildet, dass im Crashfall sich die Verstärkungsschicht 16 vom verbleibenden Fahrzeugboden 15 lösen kann und dabei vorteilhaft nicht reißt, sodass die Verstärkungsschicht 16 durch die im hinteren Bereich auf den Fahrzeugboden 15 wirkenden Zugkräfte nach oben (Pfeilrichtung O) vom verbleibenden Fahrzeugboden 15 abgehoben wird. Gleichzeitig wirkt im vorderen Anbindungsbereich des Gurtgestells 18 beispielsweise eine Druckkraft entgegengesetzt nach unten auf die Verstärkungsschicht 16.

Weiter wird im Crashfall das Rückhalteorgan 20 derart verformt, dass es sich aus seiner Position am Fahrzeugboden 15 wegbewegt. Den Fahrzeugboden 15 beispielsweise aufreißt. Beispielsweise wird das Rückhalteorgan 20 durch die auf das Gurtgestell 16 wirkenden Kräfte gestreckt. Vorteilhaft ist das Rückhalteorgan 20 derart am Fahrzeug 14 angeordnet, dass es im Crashfall einer Drehbewegung des Gurtgestells 16 um den Befestigungspunkt 21 in Fahrtrichtung F entgegenwirkt. Bevorzugterweise begrenzt das Rückhalteorgan 20 die Drehbewegung des Gurtgestells 16 im Crashfall.

### Bezugszeichenliste

- 1: Fahrzeugboden
- 2, 3: Deckschicht
- 4: Füllschicht
- 5, 6: Verstärkungsschicht
- 7: Oberseite
- 8: Unterseite
- 9: Unterseite
- 10 - 12: Verbindungsmittel
- 13: Fahrgestell
- 14: Fahrzeug
- 15: Fahrzeugboden
- 16: Verstärkungsschicht
- 16a, 16b: Verstärkungsschicht
- 17: Anbindungsbereich
- 18: Gurtgestell
- 18a, 18b: Gurtgestell
- 19: Ausschnitt
- 20: Rückstellorgan
- 20a, 20b: Rückstellorgan
- 21: Befestigungspunkt
- 22: Fahrzeugrahmen

## Patentansprüche

1. Fahrzeugboden (15) für ein Fahrzeug (14), insbesondere ein Wohnmobilfahrzeugboden für ein Wohnmobil, wobei der Fahrzeugboden (15) eine Sandwichstruktur aufweist, wobei die Sandwichstruktur eine erste Deckschicht (2) aufweist, wobei eine Oberseite (7) der ersten Deckschicht (2) im angeordneten Zustand am Fahrzeug (14) einem Fahrzeugraum zugewandt ist, wobei die Sandwichstruktur eine Füllschicht (4) aufweist, welche an eine Unterseite (8) der ersten Deckschicht (2) anschließend angeordnet ist, wobei die Unterseite (8) der ersten Deckschicht (2) gegenüberliegend und beabstandet zur Oberseite (7) der ersten Deckschicht (2) vorhanden ist, wobei die Sandwichstruktur eine zweite Deckschicht (3) umfasst, sodass die Füllschicht (4) zwischen der ersten und der zweiten Deckschicht (2, 3) sandwichartig vorhanden ist,
**dadurch gekennzeichnet, dass**
die Sandwichstruktur eine Verstärkungsschicht (5, 6, 16) aufweist, wobei die Verstärkungsschicht (5, 6, 16) eine Metallstruktur aufweist.

2. Fahrzeugboden (15) für ein Fahrzeug (14) nach dem Oberbegriff des Anspruchs 1, insbesondere nach dem Anspruch 1, **dadurch gekennzeichnet, dass**
die Sandwichstruktur eine Verstärkungsschicht (5, 6) aufweist, wobei die Verstärkungsschicht gewebe- und/oder gitterartig vorhanden ist, und wobei die Verstärkungsschicht (5, 6) zwischen der ersten Deckschicht (2) und der Füllschicht (4) oder der zweiten Deckschicht (3) und der Füllschicht (4) angeordnet ist oder wobei jeweils eine Verstärkungsschicht (5) zwischen der ersten Deckschicht (2) und der Füllschicht (4) und eine Verstärkungsschicht (6) zwischen der zweiten Deckschicht (3) und der Füllschicht (4) angeordnet ist.

3. Fahrzeugboden (15) für ein Fahrzeug (14) nach dem Oberbegriff des Anspruchs 1, insbesondere nach dem Anspruch 1 oder dem Anspruch 2, **dadurch gekennzeichnet, dass** eine Verstärkungsschicht (5, 6, 16) in die Füllschicht (4) eingebettet ist.

4. Fahrzeugboden (15) für ein Fahrzeug (14) nach dem Anspruch 1, **dadurch gekennzeichnet, dass** die Verstärkungsschicht (5, 6) die erste und/oder die zweite Deckschicht (2, 3) bildet.

5. Fahrzeugboden (15) für ein Fahrzeug (14) nach einem der Ansprüche 1 oder 3, **dadurch gekennzeichnet, dass** die Verstärkungsschicht (5, 6, 16) gewebe- und/oder gitterartig vorhanden ist.

6. Fahrzeugboden (15) für ein Fahrzeug (14) nach einem der vorangegangenen Ansprüche, **dadurch gekennzeichnet, dass** zwei Verstärkungsschichten (5, 6, 16) vorhanden sind.

7. Fahrzeugboden (15) für ein Fahrzeug (14) nach einem der vorangegangenen Ansprüche, **dadurch gekennzeichnet, dass** ein Gitterlochabstand der Verstärkungsschicht (5, 6, 16) einen Abstand zwischen 3cm und 10cm aufweist.

8. Fahrzeugboden (15) für ein Fahrzeug (14) nach einem der vorangegangenen Ansprüche, **dadurch gekennzeichnet, dass** die Verstärkungsschicht (5, 6, 16) eine Dicke zwischen 1mm und 8mm aufweist.

9. Fahrzeugboden (15) für ein Fahrzeug (14) nach einem der vorangegangenen Ansprüche, **dadurch gekennzeichnet, dass** die Verstärkungsschicht (5, 6, 16) sich entlang einer gesamten Fläche des Fahrzeugbodens (15) erstreckt.

10. Fahrzeugboden (15) für ein Fahrzeug (14) nach einem der vorangegangenen Ansprüche, **dadurch gekennzeichnet, dass** die Verstärkungsschicht (5, 6, 16), insbesondere eine von mehreren Verstärkungsschichten (5, 6, 16), sich in einem Flächenbereich zwischen 0,5 m^2 und 1 m^2 entlang einer Fläche des Fahrzeugbodens (15) erstreckt.

11. Fahrzeugboden (15) für ein Fahrzeug (14) nach einem der vorangegangenen Ansprüche, **dadurch gekennzeichnet, dass** die Verstärkungsschicht (16) des Fahrzeugbodens (15) sich zumindest in einem Flächenbereich entlang eines Anbindungsbereichs (17) eines an den Fahrzeugboden (15) anordenbaren Gurtgestells (18) erstreckt und/oder dass die Verstärkungsschicht (16) sich in einem Flächenbereich um den Anbindungsbereich (17) eines an den Fahrzeugboden (15) anordenbaren Gurtgestells (18) erstreckt.

12. Fahrzeugboden (15) für ein Fahrzeug (14) nach einem der vorangegangenen Ansprüche, **dadurch gekennzeichnet, dass** der Fahrzeugboden (15) ein Aufnahmeorgan zur Aufnahme eines Rückhalteorgans (20) eines Gurtgestells (18) eines Fahrzeugsitzes aufweist.

13. Fahrzeugboden (15) für ein Fahrzeug (14) nach einem der vorangegangenen Ansprüche, **dadurch gekennzeichnet, dass** zwei oder mehr Verstärkungsschichten (5, 6) vorhanden sind, wobei die Verstärkungsschichten (5, 6) voneinander beabstandet vorhanden sind, wobei der Fahrzeugboden (15) Verbindungsmittel (10 - 12) aufweist und die Verbindungsmittel (10 - 12) die Verstärkungsschichten (5, 6) miteinander verbinden.

14. Fahrzeug (14) mit einem Fahrzeugboden (15) nach einem der vorangegangenen Ansprüche.
